# FASCICULE DE BREVET EUROPEEN

(11) **EP 1 449 020 B1**
(45) Date de publication et mention de la délivrance du brevet: **28.09.2005**
(21) Numéro de dépôt: 02803832.1
(22) Date de dépôt: 26.11.2002
(51) Int. Cl.: G02B 13/06, G02B 23/08

(54) **DISPOSITIF DE VEILLE OPTRONIQUE SECTORIELLE OU PANORAMIQUE A GRANDE VITESSE SANS MOUVEMENT APPARENT**
EINRICHTUNG ZUR SCHNELLEN SEKTORIELLEN ODER PANORAMISCHEN ÜBERWACHUNG OHNE ANSCHEINENDE BEWEGUNG
HIGH-SPEED SECTORIAL OR PANORAMIC SURVEILLANCE DEVICE WITHOUT APPARENT MOTION

(30) Priorité: 30.11.2001 FR 0115534
(43) Date de publication de la demande: 25.08.2004
(73) Titulaire: Thales, 75008 Paris (FR)
(72) Inventeur: Delacourt, Dominique, Thales Intellectual Prop., F-94117 Arcueil Cedex (FR); Rioland, Jacques, Thales Intellectual Prop., 94117 Arcueil Cedex (FR); Megaides, Vincent, Thales Intellectual Prop., 94117 Arcueil Cedex (FR)
(74) Mandataire: Chaverneff, Vladimir
(86) Numéro de dépôt international: PCT/FR2002/004048
(87) Numéro de publication internationale: WO 2003/046633

(56) Documents cités:
- EP-A- 0 071 492
- CH-A- 131 850
- DE-A- 3 513 672
- DE-A- 3 717 906
- DE-A- 19 535 969
- FR-A- 2 692 368
- FR-A- 2 692 369
- FR-A- 2 739 192
- US-A- 5 598 263

## Description

La présente invention se rapporte à un dispositif de veille optronique sectorielle ou panoramique à grande vitesse sans mouvement apparent.

Les systèmes de veille optronique infrarouge employés ou amenés à être prochainement employés dans les forces armées peuvent être architecturés autour de plusieurs générations de détecteurs :
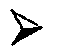 Première génération : détecteur monolithique ou à faible nombre d'éléments
   Ces systèmes de première génération se basent sur l'emploi de détecteurs infrarouges monolithiques ou à faible nombre d'éléments (par exemple SMT 11 x 4 éléments) qui nécessitent l'emploi de tambours optiques à facettes en rotation et/ou de miroirs oscillants pour réaliser une image infrarouge dans un champ angulaire réduit (par exemple 9 x 6°). La couverture d'un large champ de veille est alors assurée par la rotation de ce sous-ensemble d'imagerie en gisement et éventuellement en site.
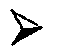 Deuxième génération : détecteurs de types « barrette »
   Ces systèmes de veille de seconde génération se basent sur l'emploi d'une barrette de détecteurs infrarouges (par exemple 288 x 4 éléments). Le dimensionnement du système optique est tel que la couverture angulaire en site est réalisée par la hauteur de la barrette de détecteurs. La couverture en gisement du champ de veille est alors réalisée par un système optique en rotation à base de miroirs permettant le déplacement de la projection de la barrette de détecteurs le long de l'axe de gisement.
   Ces systèmes de veille de première et deuxième génération présentent donc des sous-ensembles apparents en rotation, ne favorisant pas ainsi leur discrétion visuelle et radar. De plus, du fait du faible nombre de détecteurs relatifs à ces générations et à l'architecture optomécanique, ces systèmes ont des fréquences de rafraîchissement relativement faibles (de l'ordre du Hertz).
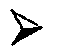 Troisième génération : détecteurs matriciels
   Ces systèmes de veille de troisième génération, en cours de développement, se basent sur l'emploi d'une matrice de détecteurs infrarouges (par exemple 256 x 256 éléments) permettant de couvrir un champ angulaire important (de l'ordre de 90°) à des cadences de rafraîchissement élevées (plusieurs dizaines de Hertz). La couverture de l'ensemble du champ de veille est assurée soit par la multiplication des sous-ensembles de détections (multiplication des matrices), soit par l'utilisation d'un système de veille panoramique à grande vitesse tel qu'exposé dans le brevet français N° 2 739 192, permettant l'emploi d'une matrice de détecteurs unique, mais présentant alors un mouvement apparent (sous-ensemble senseur en rotation autour d'un axe vertical).

Les architectures optomécaniques des systèmes de veille optronique de première et de deuxième génération ne permettent pas de les faire fonctionner à des fréquences de rafraîchissement élevés (quelques Hertz maximum) et présentent des sous-ensembles en mouvement favorisant ainsi leur détection visuelle et radar par un capteur ennemi. L'introduction des matrices de détecteurs permet de pallier ces défauts de non-discrétion et de cadences de fonctionnement faibles, mais sont limités en résolution, sauf à multiplier le nombre de matrices de détecteurs.

La présente invention a pour objet un dispositif de veille optronique sectorielle ou panoramique à grande vitesse qui ne présente pas de sous-ensemble en mouvement apparent de l'extérieur lorsqu'il est en phase de veille, et qui soit le plus simple et le moins encombrant possible.

Le dispositif de veille conforme à l'invention comporte une tête à éléments optiques et un détecteur opto-électronique, la tête étant fermée par un hublot et supportée par un mécanisme d'orientation, et il est caractérisé en ce que la tête comporte N blocs optiques catoptriques ou catadioptriques fixes disposés de façon que leurs pupilles optiques de sortie soient situées sur un cercle, ces blocs optiques étant suivis d'un périscope tournant autour de l'axe dudit cercle et lui-même suivi d'un groupe optique de focalisation et d'une matrice de détecteurs.

Selon un mode de réalisation préféré de l'invention pris à titre d'exemple non limitatif, chaque bloc optique est composé d'un miroir et d'un prisme.

La présente invention sera mieux comprise à la lecture de la description détaillée d'un mode de réalisation, pris à titre d'exemple non limitatif et illustré par le dessin annexé, sur lequel :
- la figure 1 est une vue de face d'une tête à six blocs optiques conforme à l'invention,
- les figures 2 à 4 sont des vues en coupe de la tête de la figure 1, respectivement selon II-II , III-III et IV-IV,
- la figure 5 est une vue schématique montrant la disposition relative des pupilles de sortie des six blocs optiques de la tête de la figure 1,
- la figure 6 est une vue schématique montrant deux des blocs optiques de la tête de la figure 1 avec les éléments optiques et électroniques disposés en aval,
- la figure 7 est un diagramme montrant le balayage du champ de veille par la tête de la figure 1, et
- la figure 8 est une vue d'ensemble extérieure d'un exemple de réalisation d'un dispositif de veille conforme à l'invention.

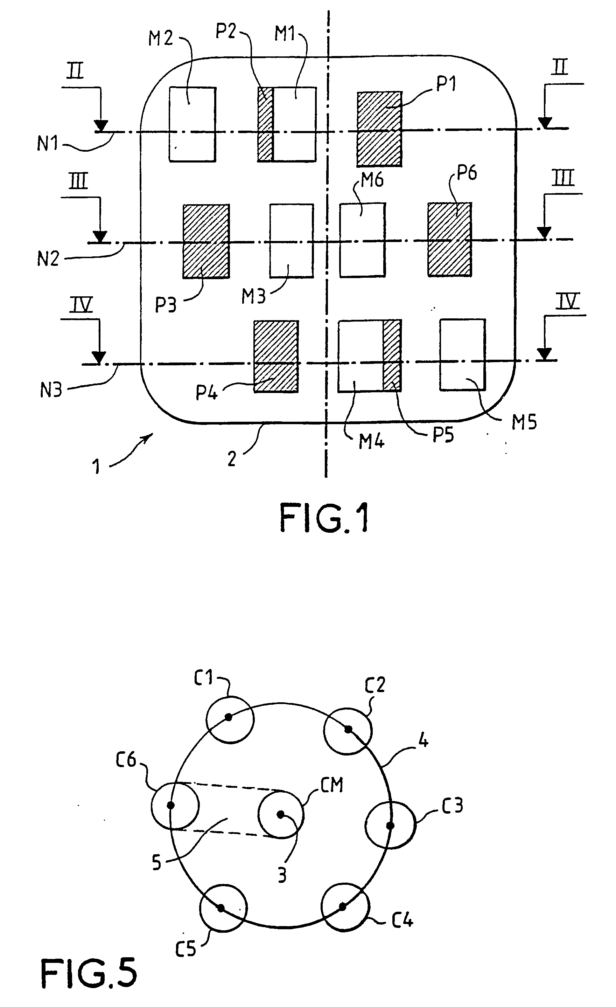

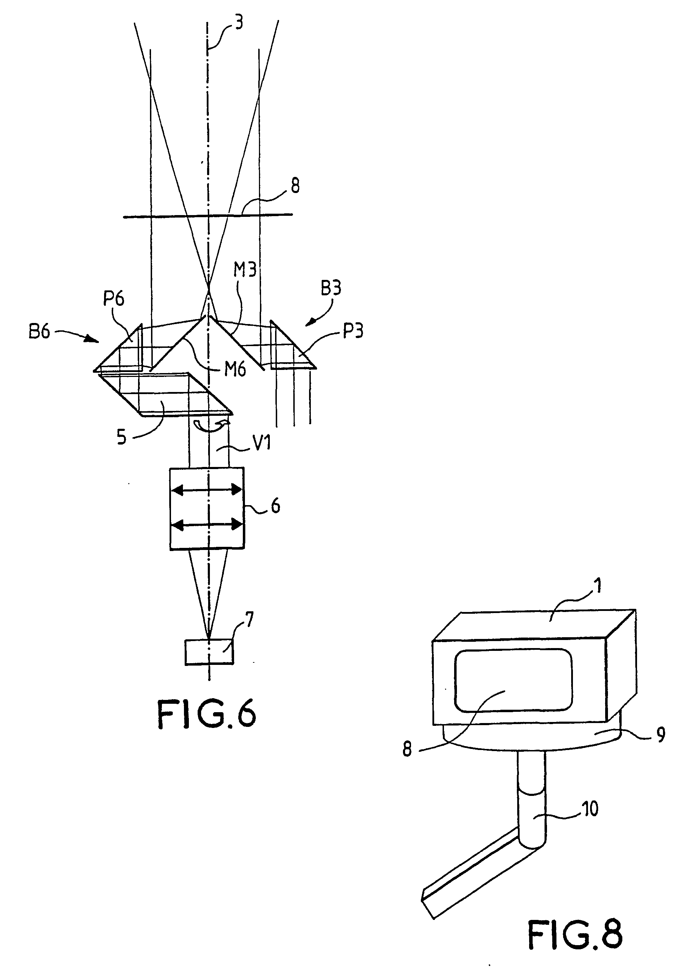

On a représenté en figure 1 la tête 1 d'un dispositif de veille, conforme à l'invention, dont le hublot de protection a été retiré. Ce hublot est représenté en figure 8. L'encadrement du hublot est référencé 2. Cette tête est orientable, par exemple grâce aux moyens représentés en figure 8 et décrits ci-dessous, en direction d'un secteur d'observation, mais il est bien entendu qu'une fois que la tête est ainsi orientée, elle ne bouge plus, seuls des éléments disposés à l'intérieur de la tête et décrits ci-dessous en référence aux figures 5 et 6, étant mobiles en rotation, mais, étant donné que ces éléments ne sont pas visibles de l'extérieur, on ne peut déceler de l'extérieur aucun mouvement de ce dispositif de veille pendant toute sa période de fonctionnement (après un certain temps de veille, la tête peut être orientée différemment, mais le temps que dure ce changement d'orientation peut être considéré comme négligeable par rapport au temps de veille, et est difficilement décelable grâce au fait qu'il n'est pas répétitif). Par conséquent, on assure la discrétion et la furtivité d'un tel dispositif de veille vis-à-vis de menaces extérieures.

Dans le présent exemple, la tête 1 comporte six blocs optiques, pour balayer un champ optique total d'environ 90° en gisement, mais il est bien entendu que ce nombre peut être différent si l'on désire balayer un champ optique en gisement d'amplitude différente et si ces blocs sont composés différemment. Ces six blocs, respectivement référencés B1 à B6 (l'ordre de numérotation de ces blocs correspond à l'ordre dans lequel ils sont généralement balayés, comme décrit ci-dessous en référence à la figure 5) sont disposés, par exemple, sur trois niveaux N1 à N3, à raison, par exemple, de deux blocs par niveau. Ces niveaux sont parallèles entre eux et perpendiculaires au plan du hublot (on suppose ici que le hublot est perpendiculaire aux axes optiques des champs vus par les blocs optiques). Le premier niveau comporte les blocs B1 et B2, le deuxième, les blocs B3 et B6, et le troisième les blocs B4 et B5. Ces blocs optiques de tête peuvent être catoptriques ou catadioptriques. Dans le présent exemple, chaque bloc optique de tête est composé d'un miroir et d'un prisme, respectivement référencés M1 à M6 et P1 à P6. Chaque bloc permet de couvrir un champ élémentaire, par exemple, de 15° x 15°. Dans le présent exemple, les faisceaux de sortie de chaque bloc optique de tête sont parallèles, mais ils pourraient ne pas l'être (dans ce dernier cas, ils pourraient être rendus parallèles par le groupe optique de focalisation 6 décrit ci-dessous). Si les blocs optiques B1 à B6 sont de type catoptrique, ils ne comportent que des éléments optiques réflectifs, et s'ils sont de type catadioptrique, ils comportent alors des éléments optiques réflectifs et des éléments optiques réfractifs. Ces blocs peuvent comporter chacun, par exemple, un prisme et un miroir, ou bien deux prismes, ou bien un seul prisme, ou bien encore quatre miroirs, ...

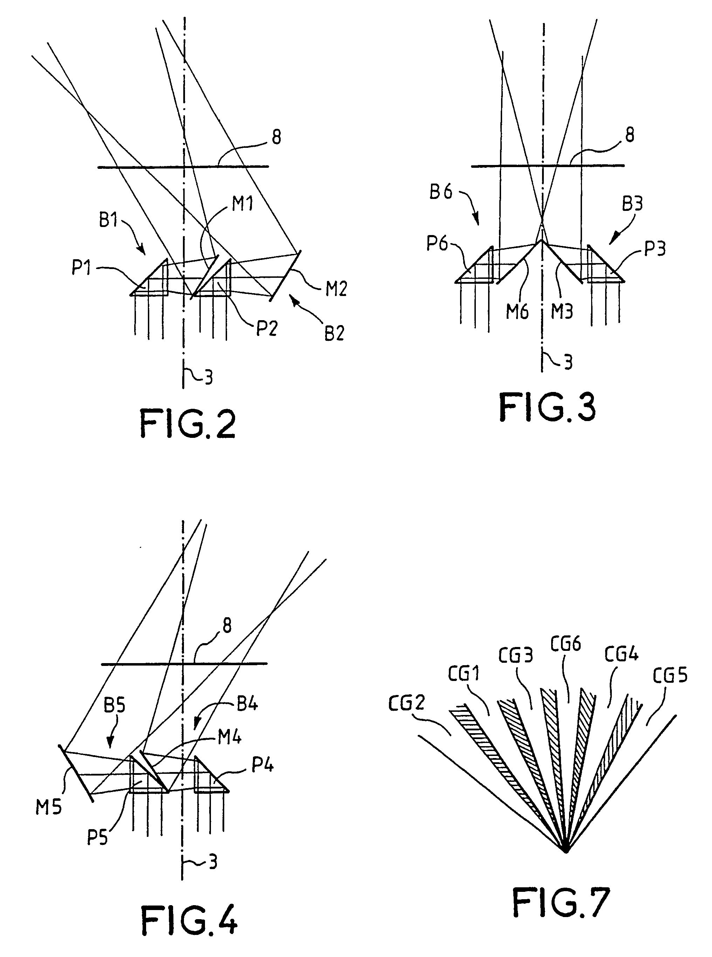

On a respectivement représenté en figures 2 à 4 les blocs des trois niveaux N1 à N3. Chacun de ces blocs comprend un miroir orienté vers le hublot et renvoyant vers le prisme correspondant le secteur optique qu'il intercepte à travers le hublot 2. Le prisme est disposé de façon à intercepter le champ optique réfléchi par le miroir et renvoyer des faisceaux parallèles en aval, parallèlement à un axe commun 3, perpendiculaire au plan du hublot.

Les six blocs optiques de tête B1 à B6 sont disposés, dans le présent exemple, de telle manière que leurs champs élémentaires respectifs qu'ils interceptent en gisement, respectivement référencés CG1 à CG6, soient le plus jointifs possible, permettant ainsi de couvrir un large champ global, par exemple, d'environ 90° en gisement et 15° en site. Selon un autre exemple (non représenté), se rapportant à une veille sectorielle, au moins une partie de ces champs élémentaires sont disjoints. Une autre exigence de disposition des six blocs optiques est que leurs pupilles optiques de sortie soient disposées le long d'un cercle 4 (voir figure 5, sur laquelle, pour simplifier le dessin, on a représenté sous forme de cercles, référencés C1 à C6 les faisceaux de sortie des blocs B1 à B6, et sous forme d'un cercle CM le faisceau multiplexé issu du périscope 5), afin de permettre le multiplexage optique sur un détecteur à champ fixe, ce cercle 4 étant parallèle au plan du hublot. De façon avantageuse, les pupilles optiques de sortie des blocs B1 à B6 sont régulièrement espacées le long du cercle 4. Ces champs élémentaires CG1 à CG6, qui se recouvrent et se croisent près de la tête (voir figures 2 à 4), à faible distance de celle-ci (quelques mètres par exemple), ne se recouvrent que légèrement deux à deux (de quelques degrés) au-delà de cette distance, c'est-à-dire à l'infini, optiquement parlant (voir figure 7). Du fait que, comme précisé ci-dessus en référence aux figures 1 à 5, les blocs optiques B1 à B6 sont disposés en trois niveaux à raison de deux blocs par niveau, leurs champs optiques élémentaires CG1 à CG6 composent le champ global en gisement dans l'ordre suivant: CG2, CG1, CG3, CG6, CG4, CG5., comme représenté en figure 7. Les zones de recouvrement, représentées hachurées sur la figure 7, se font entre les champs élémentaires suivants : CG2 et CG1, CG1 et CG3, CG3 et CG6, CG6 et CG4, CG4 et CG5.

Selon le principe de multiplexage optique par périscope, connu en soi d'après ledit brevet français N° 2 739 192, mais mis en oeuvre différemment dans le cadre de la présente invention, les six voies optiques issues des blocs optiques B1 à B6 sont balayées à tour de rôle par un périscope 5 mobile en rotation autour d'un axe confondu avec ledit axe 3. Bien entendu, le périscope peut être remplacé par tout dispositif équivalent permettant la translation des pupilles optiques de sortie des blocs B1 à B6 vers l'axe 3. Le faisceau de sortie du périscope 5 est centré par rapport à l'axe 3 et forme une voie de sortie unique V1, qui constitue une voie optique multiplexée (résultant du multiplexage temporel des voies de sortie des blocs B1 à B6). La voie V1 est focalisée par un groupe optique de focalisation 6 sur une matrice de détecteurs unique 7. Le périscope étant un invariant optique, il n'est pas nécessaire de corriger par quelque rotation que ce soit les images ainsi formées. Le périscope 5 est animé d'un mouvement de rotation qui peut être continu (si le temps d'intégration reste faible devant la cadence d'acquisition), pas à pas ou à vitesse variable. On notera que, pour simplifier le dessin, on n'a représenté en figure 6 que les groupes optiques B3 et B6, le périscope 5 étant en vis-à-vis du groupe B6.

Par exemple, dans le cas d'une matrice de détecteurs fonctionnant à 30 Hz, la rotation du périscope à une fréquence de 5 Hz permet d'obtenir un champ de veille d'environ 90° x 15° à la cadence de 5 Hz. Avec une matrice fonctionnant, par exemple, à 60 Hz, on peut ainsi obtenir un champ de veille 90° x 15° rafraîchi à 10 Hz. Du fait de la disposition des blocs optiques de la tête représentée dans le présent exemple, le balayage du champ total de, par exemple, 90° x 15° environ n'est pas continu (figure 7). Un système (non représenté) de stockage et d'adaptation de la séquence des imagettes numériques élémentaires (correspondant à chaque voie B1 à B6) produites par le détecteur matriciel est donc nécessaire.

Ce dispositif de balayage optomécanique d'un champ de veille peut être monté sur un ensemble motorisé pour orienter le champ de veille en fonction de la mission. Néanmoins, pour un secteur figé, le système de veille optronique ne présente pas de mouvement apparent, favorisant ainsi sa discrétion en conditions opérationnelles. La figure 8 présente une vue d'ensemble possible d'un tel système de veille optronique. La tête 1, fermée par son hublot 8, est fixée sur un plateau 9 mobile en rotation (autour d'un axe généralement vertical) sous l'action d'un mécanisme d'orientation (non représenté). Le plateau 9 est supporté par un mât approprié 10.

En conclusion, la présente invention met en oeuvre un procédé de multiplexage de plusieurs voies optiques à faisceaux parallèles par utilisation d'un périscope ou d'un barreau à faces parallèles en rotation. Grâce à une disposition judicieuse de systèmes optiques catoptriques ou catadioptriques fixes, de façon qu'ils couvrent chacun un champ élémentaire, ce multiplexage optique des différentes voies optiques permet de couvrir un large champ angulaire, par addition des champs élémentaires. Ce champ angulaire est couvert avec une bonne résolution à des cadences élevées (de l'ordre d'une dizaine de Hertz) en utilisant une matrice unique de détecteurs. Ces cadences de rafraîchissement élevées permettent de concevoir des traitements de détection plus robustes aux fausses alarmes, augmentant ainsi sensiblement la fiabilité opérationnelle du système de veille. De plus, ce dispositif peut être rendu très compact, du fait que les blocs optiques peuvent être de faibles dimensions, donc que le cercle 4 peut avoir un faible diamètre, et que par conséquent le périscope, seule pièce mobile, peut alors également être de faibles dimensions.

Grâce à l'invention, on peut concevoir des systèmes de veille sectorielle ou panoramique à grande fréquence de rafraîchissement sans qu'aucun élément ou sous-ensemble apparent ne soit en mouvement. Cette absence de mouvement apparent constitue un atout majeur de discrétion (faible détection visuelle) et de furtivité (réduction de la signature radar) pour un tel système, ce qui représente un avantage opérationnel significatif dans le cadre d'un emploi au sein des forces armées.

## Revendications

1. Dispositif de veille optronique sectorielle ou panoramique à grande vitesse comportant une tête (1) à éléments optiques et un détecteur opto-électronique (7), la tête (1) comportant N blocs optiques catoptriques ou catadioptriques,
**caractérisé en ce que**
la tête (1) est fermée par un hublot (8) et supportée par un mécanisme d'orientation (9) et le dispositif fonctionne sans mouvement apparent;
et **en ce que** lesdits N blocs optiques catoptriques ou catadioptriques sont fixes (B1 à B6) et disposés de façon que leurs pupilles optiques de sortie soient situées sur un cercle (4), ces blocs optiques étant suivis d'un périscope (5) tournant autour de l'axe (3) dudit cercle et lui-même suivi d'un groupe optique de focalisation (6) et d'une matrice de détecteurs (7) opto- électroniques.

2. Dispositif de veille selon la revendication 1, **caractérisé en ce que** les pupilles optiques de sortie des blocs optiques sont régulièrement espacées le long du cercle.

3. Dispositif de veille selon l'une des revendications précédentes, **caractérisé en ce que** les champs optiques élémentaires en gisement interceptés par chacun des différents blocs optiques se recouvrent légèrement deux à deux à l'infini.

4. Dispositif de veille selon l'une des revendications 1 ou 2, **caractérisé en que** qu'au moins une partie des champs optiques élémentaires en gisement interceptés par chacun des différents blocs optiques sont disjoints.

## Patentansprüche

1. Vorrichtung zur optronischen sektoriellen oder panoramischen Überwachung mit großer Geschwindigkeit, die einen Kopf (1) mit optischen Elementen und einen optoelektronischen Detektor (7) aufweist, wobei der Kopf (1) N katoptrische oder katadioptrische optische Blöcke aufweist,
**dadurch gekennzeichnet, dass**
der Kopf (1) von einem Sichtfenster (8) verschlossen und von einem Ausrichtungsmechanismus (9) getragen wird, und die Vorrichtung ohne erkennbare Bewegung arbeitet;
und dass die N katoptrischen oder katadioptrischen optischen Blöcke ortsfest (B1 bis B6) und so angeordnet sind, dass ihre optischen Ausgangspupillen sich auf einem Kreis (4) befinden, wobei auf diese optischen Blöcke ein Periskop (5) folgt, das sich um die Achse (3) des Kreises dreht und seinerseits von einer optischen Fokussiergruppe (6) und einer Matrix von optoelektronischen Detektoren (7) gefolgt wird.

2. Überwachungsvorrichtung nach Anspruch 1, **dadurch gekennzeichnet, dass** die optischen Ausgangspupillen der optischen Blöcke in gleichmäßigen Abständen entlang des Kreises angeordnet sind.

3. Überwachungsvorrichtung nach einem der vorhergehenden Ansprüche, **dadurch gekennzeichnet, dass** die elementaren optischen Felder in Seitenrichtung, die von jedem der verschiedenen optischen Blöcke erfasst werden, sich paarweise im Unendlichen leicht überlappen.

4. Überwachungsvorrichtung nach einem der Ansprüche 1 oder 2, **dadurch gekennzeichnet, dass** mindestens ein Teil der elementaren optischen Felder in Seitenrichtung, die von den verschiedenen optischen Blöcken erfasst werden, voneinander getrennt sind.

## Claims

1. High-speed optronic sectorial or panoramic surveillance device, comprising a head (1) with optical components and an optoelectronic detector (7), the head (1) being made up of N catoptric or catadioptric optical blocks, **characterized in that** the head (1) is sealed by a window (8) and supported by an orientation mechanism (9) and the device operates with no apparent movement; and **in that** said N catoptric or catadioptric optical blocks are stationary (B1 to B6) and arranged so that their optical exit pupils lie on a circle (4), these optical blocks being followed by a periscope (5) that rotates about the axis (3) of said circle and is itself followed by an optical focusing group (6) and by an optoelectronic detector matrix (7).

2. Surveillance device according to Claim 1, **characterized in that** the optical exit pupils of the optical blocks are uniformly spaced around the circle.

3. Surveillance device according to either of the preceding claims, **characterized in that** the elementary optical fields in bearing, which are intercepted by each of the various optical blocks, overlap slightly in pairs at infinity.

4. Surveillance device according to either of Claims 1 and 2, **characterized in that** at least some of the elementary optical fields in bearing that are intercepted by each of the various optical blocks are not contiguous.
